# EUROPÄISCHE PATENTANMELDUNG

(11) **EP 4 841 076 A1**
(43) Veröffentlichungstag der Anmeldung: **18.11.2026**
(21) Anmeldenummer: 26168338.7
(22) Anmeldetag: 27.03.2026
(51) Int. Cl.: F01K 3/00, C12C 7/22, C12C 13/00, C12C 13/02, F01K 1/00, F22B 1/00, F22G 5/00, F28B 1/00

(54) **BEREITSTELLUNG EINES HOCHTEMPERATUR-WÄRMETRÄGERS IN EINER BRAUEREI**

(30) Priorität: 16.05.2025 DE 102025119041
(71) Anmelder: Steinecker GmbH, 85356 Freising-Attaching (DE)
(72) Erfinder: Friedrich, Michael, 85356 Freising-Attaching (DE)
(74) Vertreter: Grünecker Patent- und Rechtsanwälte PartG mbB

(57) **Zusammenfassung**

Die vorliegende Erfindung betrifft eine Brauerei, die umfasst: einen Energiespeichertank zum Speichern, insbesondere rekuperativ gewonnener, thermischer Energie mittels eines flüssigen Wärmeträgers; einen Verdampfungstank, der mit dem Energiespeichertank zum Leiten des flüssigen Wärmeträgers aus dem Energiespeichertank in den Verdampfungstank verbundenen ist, wobei der Verdampfungstank dazu ausgebildet ist, aus einem Teil des flüssigen Wärmeträgers einen dampfförmigen Wärmeträger zu erzeugen und einen Dampfverdichter, der mit dem Verdampfungstank zum Leiten des dampfförmigen Wärmeträgers aus dem Verdampfungstank in den Dampfverdichter verbundenen ist, wobei der Dampfverdichter dazu ausgebildet ist, zumindest einen Teil des dampfförmigen Wärmeträgers unter Erhöhung der Temperatur desselben zu verdichten, um einen verdichteten dampfförmigen Wärmeträger zu erzeugen.

## Beschreibung

### Gebiet der Erfindung

Die vorliegende Erfindung betrifft das technische Gebiet der Brauereien und der der Getränkeherstellung insbesondere unter Verwendung eines Hochtemperatur-Wärmeträgers.

### Stand der Technik

Bei der Herstellung von Bier, wie auch von bestimmten anderen Getränken, ist ein wesentlicher Kostenfaktor der Energieverbrauch verschiedener Aufheiz- und Abkühlvorgänge. Insbesondere ist das Bereitstellen von, beispielsweise für die Würzekochung benötigter, thermischer Hochtemperatur-Energie sehr kostenintensiv.

Aus dem Stand der Technik sind unterschiedliche Möglichkeiten der Bereitstellung von Hochtemperatur-Energie in Form von Dampf oder Hochdruckheißwasser bekannt. Diese Hochtemperatur-Energie, mit einer Temperatur von typischer Weise über 120 °C, wird beispielsweise über einen Dampfkessel oder einen Hochdruckheißwasserkessel unter Verbrennung von Primärenergie, beispielsweise Öl oder Gas, bereitgestellt. Auch ist es bekannt, rekuperativ gewonnene Hochtemperatur-Energie durch den Einsatz eines Brüdenverdichters an der Würzekochung bereitzustellen.

Die Anwendung eines Brüdenverdichters weist aber schwerwiegende Nachteile auf. Ein Brüdenverdichter sollte mit einem bestimmten und möglichst konstanten Dampfvolumenstrom betrieben werden und ist somit in der Wahl des Betriebspunktes nicht sonderlich flexibel. Der Betriebspunkt wird auf eine bestimmte Verdampfung, also einen zu erzeugenden Brüdendampfvolumenstrom, eingestellt und kann später nur aufwändig geändert oder angepasst werden. Bricht dieser Brüdendampfvolumenstrom durch Zugabe kälteren Mediums, beispielsweise während der Hopfengabe, ein, d.h. nimmt der Dampfdruck in der Würzepfanne ab, kann es zu einem Ausfall des Verdichters kommen. Das erneute Starten des Brüdenverdichters kann dann mehrere Minuten in Anspruch nehmen. In dieser Zeit geht thermische Brüdenenergie, zumeist über Dach, verloren. Zudem muss bei dieser Art von Brüdenverdichtung nicht nur ein möglichst konstanter Dampfvolumenstrom verarbeitet werden, sondern es kann damit auch beispielsweise im Wesentlichen keine sogenannte Phasenkochung realisiert werden. Das heißt, während der Würzekochung kann nicht oder nur bedingt mit unterschiedlicher Intensität gekocht werden.

Weiterhin benötigt ein Brüdenverdichter während der Pausen zwischen zwei Kochungen, gemeint ist hier zwischen zwei aufeinander folgenden Suden, also im Stand-by-Betrieb, für die Warmhaltung viel Energie die extern bereitgestellt werden muss. Der Wärmestrom zur Warmhaltung des Brüdenverdichters beträgt meist mehr als 3% des Wärmestroms, der während einer Verdichtung am Brüdenverdichter gewonnen wird. Das wiederum senkt die gesamte Effizienz des Brüdernverdichters deutlich und erhöht damit den Verbrauch thermischer Energie einer Brauerei.

Zudem währt der Startprozess, auch wenn der Brüdenverdichter warm ist, teilweise mehrere Minuten, um auf die benötigte Leistung beziehungsweise in den Arbeitsbereich des Brüdenverdichters zu gelangen. In dieser Zeit wird sogenannte Stützenergie aus einer externen Quelle benötigt.

Weiterhin wird ein Brüdenverdichter mit den Brüden aus der Würze betrieben, die jedoch mit unerwünschten organischen Stoffen belastet sind und somit den Brüdenverdichter und die nachgeschaltete Würzekocheinrichtung verschmutzen. Aus diesem Grund sind Brüdenverdichtern separate, zusätzliche Wärmeübertrager zugeordnet, woraus ein zusätzlicher apparativer Aufwand und Wärmeverluste resultieren. Beispielsweise ist bei Verwendung eines Brüdenverdichters eine Würzepfanne zum Ankochen und Einbringen von Stützenergie mit einem Innenkocher ausgestattet und zusätzlich zur Verwendung der verdichteten Brüden mit einem Außenkocher ausgestattet. Auch benötigt ein Brüdenverdichter eine Einspritzvorrichtung zur Kühlung beziehungsweise Erzeugung von Sattdampf. Das Einspritz-Wasser geht nach Abgabe der Energie des Dampfs nach der Kocheinrichtung verloren, da das mit organischen Stoffen belastete Kondensat aus dem Dampf nach der Kocheinrichtung verworfen wird. Wird der verdichtete Brüdendampf direkt und ohne zusätzliche Heizeinrichtung für Heizzwecke in die Würze eingeleitet, wird die Würze zum einen durch das Einspritzwasser zusätzlich verdünnt und zum anderen mit den enthaltenen unerwünschten organischen Stoffen des Brüden wieder belastet.

Für den Einsatz eines Brüdenverdichters bei der Würzekochung ist es erforderlich, nicht nur die Würze aufzuheizen, sondern auch sogenannte Start-Energie einzubringen und die ersten Brüden damit zu erzeugen, um den Brüdenverdichter starten zu können. Darüber hinaus ist es zumeist notwendig, wie beschrieben, Stützenergie in den Prozess der Würzekochung einbringen zu können. Damit können Druckschwankungen, beispielsweise durch eine Hopfengabe, ausgeglichen und der Brüdenverdichter gleichmäßig betrieben werden. Somit kann während der Würzekochung die Start-Energie nur teilweise abgeschaltet und häufig nur ein Teil der Wärmeenergie des Brüdendampfs mittels Brüdendampf-Verdichter wiederverwendet werden.

Angesichts des beschriebenen Stands der Technik liegt der vorliegenden Erfindung die Aufgabe zugrunde, effizient und zuverlässig thermische Hochtemperatur-Energie in einer Brauerei bereitzustellen, insbesondere ohne die oben beschriebenen bei Verwendung eines Brüdenverdichters unvermeidbaren Nachteile.

### Beschreibung der Erfindung

Die oben genannte Aufgabe wird durch Bereitstellen einer Brauerei gelöst, die umfasst:
einen Energiespeichertank zum Speichern, insbesondere rekuperativ gewonnener, thermischer Energie mittels eines flüssigen Wärmeträgers;
einen Verdampfungstank, der mit dem Energiespeichertank zum Leiten des flüssigen Wärmeträgers aus dem Energiespeichertank in den Verdampfungstank verbundenen ist, wobei der Verdampfungstank dazu ausgebildet ist, aus einem Teil des flüssigen Wärmeträgers einen dampfförmigen Wärmeträger zu erzeugen; und
einen Dampfverdichter, der mit dem Verdampfungstank zum Leiten des dampfförmigen Wärmeträgers aus dem Verdampfungstank in den Dampfverdichter verbundenen ist, wobei der Dampfverdichter dazu ausgebildet ist, zumindest einen Teil des dampfförmigen Wärmeträgers unter Erhöhung der Temperatur desselben zu verdichten, um einen verdichteten dampfförmigen Wärmeträger zu erzeugen.

Insbesondere kann der Verdampfungstank auch mit dem Energiespeichertank zum Leiten zumindest eines Teils des in dem Verdampfungstank abgekühlten flüssigen Wärmeträgers verbunden sein, sodass ein geschlossener Wärmeträgerkreislauf zwischen dem Energiespeichertank und dem Verdampfungstank ohne Verwendung eines Wärmetauschers ausgebildet wird. Der Wärmeträger kann beispielsweise Wasser, beispielsweise Brauwasser, unbehandeltes oder aufbereitetes (beispielsweise enthärtetes) Wasser oder auch Kesselspeisewasser (entsalztes und aufbereitetes Wasser), sein.

Insbesondere kann der Energiespeichertank ein Schichtenspeichertank sein, in dem auf unterschiedlichen Niveaus Wärmeträger unterschiedlicher Temperaturen gespeichert wird. Der Energiespeichertank kann beispielsweise in verschiedenen Teilbereichen Wärmeträger/Wärme mit Temperaturniveaus zwischen 75 °C und 98 °C oder 75 °C und 110 °C oder auch mit Temperaturen darüber, beispielsweise zwischen 115 °C und 120 °C oder zwischen 120 °C und 145 °C, speichern. Im unteren Bereich des Energiespeichertanks kann auch ein deutlich kälterer Wärmeträger mit einer Temperatur von weniger als 55 °C oder beispielsweise mindestens 4 °C gespeichert werden. Ein unterer Bereich eines Energiespeichers kann auch jeglicher Bereich unterhalb einer obersten Ein- und Auslagerung eines Energiespeichers für einen Wärmeträger sein. Ein oberer Bereich eines Energiespeichers kann auch jeglicher Bereich oberhalb einer untersten Ein- und Auslagerung eines Energiespeichers für einen Wärmeträger sein. Die Einlagerung und Auslagerung des Wärmeträgers kann temperaturabhängig mittels einer oder mehrerer horizontaler oder vertikaler (Schicht-)Ladelanzen erfolgen. Der Energiespeichertank kann Regelklappen, Temperatursonden, zusätzliche Leitungen und Steuerungen zur temperaturabhängigen Schichtung oder Entnahme von Wärmeträger aufweisen. Der Energiespeicher kann auch mit einer innen- und/oder außenliegenden elektrischen Heizeinrichtung versehen sein. Der Energiespeichertank kann atmosphärisch offen oder atmosphärisch geschlossen (beispielsweise als Drucktank) ausgebildet sein.

Der Verdampfungstank wird beispielsweise durch den Dampfverdichter selbst, also durch ein An-/Absaugen aus dem Verdampfungstank auf einen definierten Unterdruck oberhalb der flüssigen Phase des Wärmeträgers im Verdampfungstank gebracht. Hierdurch beziehungsweise durch das Ab- beziehungsweise Ansaugen zumindest eines Teils der dampfförmigen Phase eines Wärmeträgers aus dem Verdampfungstank, wird bewusst das thermodynamische Gleichgewicht der flüssigen und dampfförmigen Phase des Wärmeträgers im Verdampfungstank gestört und Unterdruck erzeugt. Es kommt zu einer Niederdruckverdampfung.

Der Druck im Verdampfungstank wird also unter den Dampfdruck (Verdampfungsdruck) des flüssigen Wärmeträgers im Verdampfungstank abgesenkt, ähnlich einer "Vakuumdestillation", und die flüssige Phase kann somit überhitzen und es bildet sich Dampf aus zumindest einem Teil des Wärmeträgers. Damit gibt die flüssige Phase des Wärmeträgers Wärme ab und wird abgekühlt. Eine möglichst große Oberfläche des Wärmeträgers, beispielsweise durch Einspritzung in den Verdampfungstank, ist dabei vorteilhaft. Allgemein beziehungsweise umgangssprachlich kann dieser Vorgang auch als "Kochen" oder "Entspannungsverdampfung" oder "Niederdruckverdampfung" bezeichnet werden. Der Dampf transportiert somit thermische Energie aus dem Verdampfungstank.

Durch die Einstellung/Definition des Unterdrucks am Verdampfungstank kann auch die Temperatur des Wärmeträgers nach der Entspannungs-/Niederdruckverdampfung eingestellt werden. Der für die Verdichtung erforderliche Niedertemperaturdampfvolumenstrom kann unter anderem in Abhängigkeit der Zu- und Abführung von warmem, für eine Niederdruckverdampfung geeigneten, Wärmeträger (Temperatur) zum/vom Verdampfungstank, den zu erzeugenden Unterdruck am Verdampfungstank (temperaturabhängig), die zu erzielende Abkühlung des flüssigen Teils des Wärmeträgers im Verdampfungstank und/oder der Temperatur des zugeführten flüssigen Wärmeträgers zum Verdampfungstank und/oder die durch Verdichtung zu erzeugende Dampfmasse beziehungsweise den zu erzeugenden Wärmestrom mit Hochtemperaturniveau flexibel eingestellt werden. Wasser ist auf Grund seiner großen Wärmekapazität für dieses physikalische Grundprinzip geeignet. Weiter weist Wasser bei Meereshöhe einen Umgebungsdruck von 1013 mbar auf und verdampft bei 100 °C. Durch die Absenkung des Drucks im Verdampfungstank, durch Unterdruck/Niederdruck, beispielsweise auf einen absoluten Druck von 400 mbar, verdampft Wasser bereits bei circa 75,9 °C. Der Niedertemperaturdampf weist dann auch diese Temperatur vor der Verdichtung und seiner Temperaturerhöhung auf.

Der von dem Verdampfungstank an den Dampfverdichter gelieferte und/oder durch den Verdichter angesaugte dampfförmigen Wärmeträger kann in dem Dampfverdichter beispielsweise auf eine Temperatur zwischen 105 °C und 200 °C, beispielsweise zwischen 115 °C und 150 °C, beispielsweise unter Einsatz von elektrischer Energie, verdichtet werden. Die elektrische Energie dafür stammt beispielsweise aus regenerativen Quellen wie beispielsweise einer Photovoltaikanlage oder einem mit Biogas betriebenen Blockheizkraftwerk. Besonders vorteilhaft kann der Einsatz eines Blockheizkraftwerks sein, da es thermische (auf dem erforderlichen Temperaturniveau) und elektrische Energie für einen Dampfverdichter zur Verfügung stellen kann. Das Blockheizkraftwerk kann beispielsweise mit dem Energiespeicher und/oder direkt mit dem Verdampfungstank verbunden sein. Ist das Blockheizkraftwerk mit dem Energiespeicher in Verbindung, ergibt sich der Vorteil der hydraulischen Entkopplung des Blockheizkraftwerks. Darüber hinaus ermöglicht es den konstanten Betrieb eines Blockheizkraftwerks und die zeitliche Entkoppelung der Dampferzeugung, da thermische Energie im Energiespeicher zwischengespeichert werden kann. Somit kann die HochtemperaturErzeugung und deren Verbrauch zeitlich von einer Energiequelle entkoppelt werden. Der in dem Dampfverdichter erzeugte verdichtete dampfförmige Wärmeträger kann dann direkt an zumindest einen Hochtemperatur-Energie-Wärmeverbraucher der Brauerei geliefert werden. Hier und im Weiteren wird unter Hochtemperatur eine Temperatur von mindestens 100 °C, beispielsweise mindestens 120 °C, 125 °C oder 145 °C verstanden. Der Hochtemperatur-Energie-Wärmeverbraucher kann beispielsweise ein Würzekocher/-heißhalter oder eine Flaschenreinigungsvorrichtung sein. Der in dem Dampfverdichter erzeugte verdichtete dampfförmige Wärmeträger kann alternativ zunächst an einen Heißdampfkühler geliefert werden, der wiederum mit zumindest einem Hochtemperatur-Energie-Wärmeverbraucher der Brauerei verbunden ist und diesen mit thermischer Hochtemperatur-Energie versorgt (siehe Beschreibung unten). Hier und in der weiteren Beschreibung der erfindungsgemäßen Weiterbildungen/Ausführungsformen der Erfindung kann alternativ oder zusätzlich zu dem Heißdampfkühler ein Dampfspeicher vorgesehen sein. Der Dampfspeicher kann beispielsweise vor oder nach dem Heißdampfkühler, insbesondere irgendwo zwischen dem Dampfverdichter und dem Wärmeverbraucher, angeordnet sein.

Erfindungsgemäß können ein oder mehrere Hochtemperatur-Energie-Wärmeverbraucher, beispielsweise sämtliche Hochtemperatur-Energie-Wärmeverbraucher, der Brauerei mit thermischer Hochtemperatur-Energie unter Verwendung des Dampfverdichters und des Energiespeichertanks versorgt werden, ohne dass ein Brüdenverdichter beispielsweise an einer Würzepfanne mit den oben beschriebenen Nachteilen nötig wäre. Mithilfe des Dampfverdichters kann zuverlässig und zeitlich passend, beispielsweise im Wesentlichen kontinuierlich, Hochtemperatur-Energie bereitgestellt werden. Eine bereits bestehende Brauerei kann mit einem solchen Dampfverdichter und optional dem Heißdampfkühler nachgerüstet werden, sodass im idealen Fall ein Kesselhaus der bestehenden Brauerei (im Wesentlichen) obsolet wird.

Die erfindungsgemäße Brauerei kann weiterhin einen Verbraucher thermischer Energie (insbesondere einen Hochtemperatur-Energie-Wärmeverbraucher) umfassen, der mit dem Dampfverdichter zum Leiten des verdichteten dampfförmigen Wärmeträger aus dem Dampfverdichter zu dem Verbraucher verbunden ist, und der mit dem Energiespeichertank und/oder dem Verdampfungstank zum Speichern beispielsweise von von dem Verbraucher rekuperativ gewonnener thermischer Energie verbunden ist. So kann ein Wärmeträger aus einem oberen (wärmeren) Bereich des Energiespeichertanks über den Verdampfungstank und zumindest teilweise zu dem Dampfverdichter geleitet werden und ein durch Wärmeverbrauch in dem Verbraucher abgekühlter kondensierter Wärmeträger in einen unteren (kühleren) Bereich des Energiespeichertanks und/oder Verdampfungstank eingeleitet werden. Der Verbraucher kann beispielsweise eine Würzepfanne, die mit einem Pfannendunstkondensator zur rekuperativen Gewinnung thermischer Energie ausgestattet sein kann, sein. Wärmeträger aus einem unteren (kühleren) Bereich des Energiespeichertanks kann über die thermische Energie von von dem Verbraucher rekuperativer Energie gewonnene thermische Energie erwärmt und in einen oberen (wärmeren) Bereich des Energiespeichertanks und/oder den Verdampfungstank geleitet werden. Die rekuperative Gewinnung thermischer Energie eines Verbrauchers kann beispielsweise über einen Pfannendunstkondensator erfolgen. Somit wird, wenn ein Wärmeträger aus dem Energiespeichertank entnommen wird, der Wärmeträger auch wieder dem Energiespeichertank zugeführt, sodass der Dampfverdichter weitgehend kontinuierlich betrieben, Stand-by vermieden und die erzeugte Hochtemperatur oder Niedertemperatur (hierunter wird hierin eine Temperatur von weniger als 100 °C, insbesondere weniger als 96 °C, insbesondere weniger als 90 °C, verstanden) in dem Energiespeichertank geeignet zwischengespeichert und für Wärmeverbraucher vorgehalten werden kann.

Da es sich bei dem Energiespeicher um einen Schichtenspeicher handeln kann, kann die Rückführung des Wärmeträgers auf Höhe der korrespondierenden Temperatur im Energiespeichertank erfolgen. Durch Verwendung eines Wärmeträgers eines Energiespeichers sowohl als Niedertemperaturmedium, als auch als Hochtemperaturmedium, hier in Form von Dampf nach dem Dampfverdichter, werden Übertragungsverluste minimiert.

Gemäß einer Weiterbildung umfasst die Brauerei weiterhin einen Wärmetauscher, der mit dem Dampfverdichter zum Erhitzen eines, insbesondere aus dem Energiespeichertank dem Wärmetauscher zugeleiteten, flüssigen Wärmeträgers verbunden ist. Der Wärmetauscher ist weiterhin mit dem Energiespeichertank zum Leiten des in dem Wärmetauscher erhitzten flüssigen Wärmeträgers in den Energiespeichertank verbunden. Der Wärmetauscher kann auch als der oben genannte Verbraucher thermischer Energie beziehungsweise Hochtemperatur-Energie-Wärmeverbraucher angesehen werden.

Handelt es sich bei dem Energiespeicher um einen atmosphärisch offenen Speicher, kann er mit Niedertemperatur über den Wärmetauscher beladen werden. Handelt es sich bei dem Energiespeichertank um einen atmosphärisch geschlossenen Tank (beispielsweise Druckspeichertank), kann er auch mit Hochtemperatur beladen werden. Die thermische Energie kann auf entsprechender Höhe dem Energiespeichertank entnommen und Niedertemperatur-Energie-Verbrauchern beziehungsweise im Fall eines Druckspeichers auch Hochtemperatur-Energie-Wärmeverbrauchern zur Verfügung gestellt werden. Es ist möglich, wenn ein Hochtemperatur-Energie-Wärmeverbraucher ein Dampfverbraucher ist, diesen vor dem Wärmetauscher, nach dem Dampfverdichter beziehungsweise einem optionalen Heißdampfkühler abzuzweigen. Der von dem Dampfverdichter beziehungsweise optionalen Heißdampfkühler an einen Hochtemperatur-Energie-Wärmeverbraucher gelieferte Wärmeträger kann nach Abgabe thermischer Energie an den Hochtemperatur-Energie-Wärmeverbraucher als kondensierter Wärmeträger wieder in den Verdampfungstank zurückgeführt werden und kann dort nochmals thermische Energie für den Verdampfungsprozess abgeben. Auch der in dem Wärmetauscher beim Heizen des in dem Energiespeichertank zwischenzuspeichernden Wärmeträgers kondensierte Wärmeträger kann in den Verdampfungstank zurückgeführt werden.

Gemäß einer Weiterbildung umfasst die erfindungsgemäße Brauerei zusätzlich zu dem oben beschriebenen Energiespeichertank einen weiteren Energiespeichertank und einen (von dem oben beschriebenen verschiedenen) Wärmetauscher, der a) mit dem weiteren Energiespeichertank zum Leiten eines flüssigen Wärmeträgers aus dem weiteren Energiespeichertank zu dem Wärmetauscher verbunden ist, b) mit dem Dampfverdichter zum Erhitzen des von dem weiteren Energiespeichertank zugeleiteten flüssigen Wärmeträgers verbunden ist und c) mit dem weiteren Energiespeichertank zum Leiten des erhitzten flüssigen Wärmeträgers in den weiteren Energiespeichertank verbunden ist. Aus beiden Tanks, dem oben genannten Energiespeichertank und dem weiteren Energiespeichertank, können Wärmeverbraucher mit thermischer Energie versorgt werden. Der weitere Energiespeichertank kann wie der oben beschriebene Energiespeichertank ausgebildet sein. Beispielsweise ist der Energiespeichertank als atmosphärisch offener Tank zur Versorgung von Niedertemperatur-Energie-Wärmeverbrauchern und der weitere Energiespeichertank als Drucktank zur Versorgung auch von Hochtemperatur-Energie-Wärmeverbrauchern ausgebildet.

Der weitere Energiespeichertank kann ein Wärmespeicher, insbesondere ein metallbasierter Hochtemperaturspeicher, ein Latentwärmespeicher (basierend auf einen Enthalpieumsatz der Phasenänderung eines Speichermaterials, damit kann eine große Energiemenge auf dem Temperaturniveau des Phasenwechsels zur Verfügung gestellt werden), ein sensibler Speicher (die gespeicherte Energiemenge hängt von der spezifischen Wärmekapazität des Speichermaterials, dessen Masse und der nutzbaren Temperaturänderung ab), ein thermochemischer Speicher (basierend auf einer Enthalpieänderung einer physikalischen Umwandlung (Sorption) oder einer reversiblen chemischen Reaktion zur Speicherung, verlustfrei über beliebige Zeiträume speicherbar), ein Feststoffspeicher oder ein Flüssigspeicher, zum Speichern und Bereitstellen von Prozesswärme sein. Auch die Bereitstellung von Prozessdampf mittels solcher Speicher ist möglich. Der weitere Energiespeichertank speichert beispielsweise einen Wärmeträger mit einer höheren Temperatur als derjenigen eines im Energiespeichertank gespeicherten Wärmeträgers.

Handelt es sich bei einem weiteren Energiespeichertank um einen Speicher mittels dem Dampf, im speziellen Prozessdampf, für Verbraucher zur Verfügung gestellt werden kann, wird im Weiteren in diesem Dokument nur noch von einem Dampfspeicher gesprochen. Ein Dampfspeicher kann einer der oben genannten Arten von Energiespeichern sein.

Wird im Weiteren von einem Dampfspeicher als weiterem Energiespeicher gesprochen, handelt es sich bevorzugt um einen Latentwärmespeicher. Dieser kann ein Gleichdruck oder weiter bevorzugt ein Druckdampfspeicher sein, der über Druckunterschiede arbeitet und die latente Wärme beispielsweise und bevorzugt mittels Wasser als Wärmeträgermedium nutzt. Beim Entladen sinkt der Druck, Wärmeträger verdampft (Phasenwechsel flüssig zu gasförmig) und nimmt dabei Energie auf. Wird der Speicher beladen läuft der Phasenwechsel umgekehrt ab (Phasenwechsel gasförmig zu flüssig) und es wird Energie in der flüssigen Phase vorgehalten, der Druck steigt wieder an. Es wird also die Energiemenge des Wärmeträgermediums, die bei einem Phasenwechsel aufgenommen oder abgegeben werden kann, genutzt.

Handelt es sich bei dem Dampfspeicher um einen metallbasierten Hochtemperaturspeicher, auch keramikbasierte Materialien sind hier eingeschlossen, wird Energie auf einem hohen Temperaturniveau mittels Dampf im Material eingespeichert. Wird Dampf benötigt, wird Wasser durch bzw. in den Speicher eingeleitet und durch die gespeicherte Hochtemperatur in Dampf verwandelt.

Die bei Einsatz eines Dampfspeichers benötigten Armaturen, Feldgeräte, Steuerung und/oder Nebengewerke, wie beispielsweise einer Dampfdruckreduzierung bei einem Druckdampfspeicher, sind dem Fachmann geläufig, werden im Weiteren nicht beschrieben und als Bestandteil eines Dampfspeichers betrachtet.

Durch den Einsatz eines Dampfspeichers kann die Auslastung (beispielsweise gleichmäßige Last) und damit auch die Laufzeit (beispielsweise weniger An- und Abfahren) und Lebensdauer eines Dampfverdichters deutlich erhöht werden. Zudem kann ein Dampfverdichter kleiner ausgeführt werden, da Spitzenlasten bzw. Lastspitzen an benötigtem Dampf durch einen solchen Dampfspeicher abgefangen und bereitgestellt werden können.

Ein Dampfspeicher kann optional eingesetzt werden und kann in verschiedenen Bereichen des Systems vorgesehen sein. Ein Dampfspeicher kann direkt nach einem Dampfverdichter und vor einem optionalen Heißdampfkühler oder nach einem optionalen Heißdampfkühler installiert sein. Der optionale Dampfspeicher kann somit beispielsweise irgendwo zwischen einem Dampfverdichter und einem Wärmeverbraucher angeordnet sein. Weiter kann ein optionaler Dampfspeicher auch parallel zu anderen Verbrauchern thermischer Energie, beispielsweise einem Wärmetauscher, wie bereits weiter oben beschrieben, vorgesehen sein, d.h. der Dampfvolumenstrom aus dem Dampfverdichter oder nach dem optionalen Heißdampfkühler kann aufgeteilt sein, ein Teil wird dann beispielsweise in den Dampfspeicher geleitet, der andere Teil zu einem Verbraucher thermischer Energie.

Wie bereits oben erwähnt, kann ein Heißdampfkühler, der mit dem Dampfverdichter verbunden ist, vorhanden sein. Mittels des Heißdampfkühler kann Sattdampf erzeugt werden, der zur Versorgung eines Verbrauchers thermischer Energie vorteilhaft sein kann, da Sattdampf eine bessere Wärmeübertragung als Heißdampf, der abkühlen muss, um Wärme abzugeben, aufweist. Heißdampf ist ein über seine Sättigungstemperatur erhitzter (Wasser-)Dampf und damit nicht das ideale Medium für eine Wärmeübertragung. Während Sattdampf direkt die Phase ändern kann, was zu Temperaturgradienten über eine Wärmeübertragungsfläche führen kann, muss Heißdampf abkühlen, um Wärme abzugeben.

Gemäß einer Weiterbildung umfasst die Brauerei somit weiterhin einen Heißdampfkühler, der mit dem Dampfverdichter zum Leiten des verdichteten dampfförmigen Wärmeträger aus dem Dampfverdichter zu dem Heißdampfkühler verbunden ist, wobei der Heißdampfkühler dazu ausgebildet ist, zumindest aus einem Teil des verdichteten dampfförmigen Wärmeträgers Sattdampf zu erzeugen. Der so erzeugte Sattdampf kann dann der Versorgung eines Hochtemperatur-Energie-Wärmeverbrauchers dienen. So kann die Brauerei weiterhin einen Verbraucher thermischer Energie (Hochtemperatur-Energie-Wärmeverbraucher) umfassen, der mit dem Heißdampfkühler zum Leiten des Sattdampfes von dem Heißdampfkühler zu dem Verbraucher verbunden ist, und der mit dem Energiespeichertank und/oder dem Verdampfungstank zum Speichern von von dem Verbraucher rekuperativ gewonnener thermischer Energie verbunden ist.

Das für die Heißdampfkühlung verwendete Medium kann ein in dem Energiespeichertank gespeicherter Wärmeträger sein. Beispielsweise wird ein flüssiger Wärmeträger mit einer möglichst hohen Temperatur verwendet. Der Wärmeträger kann dabei direkt aus dem Energiespeichertank oder einer Rücklaufleitung nach einem Hochtemperatur-Energie-Wärmeverbraucher oder auch aus dem Verdampfungstank stammen. Dadurch wird die Massenbilanz des Wärmeträgers im (Gesamt-) System nicht verändert.

Die mit dem Heißdampfkühler ausgestattete Brauerei kann weiterhin einen Wärmetauscher umfassen, der mit dem Heißdampfkühler zum Erhitzen eines, insbesondere aus dem Energiespeichertank dem Wärmetauscher zugeleiteten, flüssigen Wärmeträgers verbunden ist, und der mit dem Energiespeichertank zum Leiten des erhitzten flüssigen Wärmeträgers in den Energiespeichertank verbunden ist.

Die mit dem Heißdampfkühler ausgestattete Brauerei kann weiterhin einen weiteren Energiespeichertank und einen (von dem oben beschriebenen verschiedenen) Wärmetauscher umfassen, wobei der Wärmetauscher a) mit dem weiteren Energiespeichertank zum Leiten eines flüssigen Wärmeträgers aus dem weiteren Energiespeichertank zu dem Wärmetauscher verbunden ist, b) mit dem Heißdampfkühler zum Erhitzen des von dem weiteren Energiespeichertank zugeleiteten flüssigen Wärmeträgers mit dem Heißdampfkühler verbunden ist und c) mit dem weiteren Energiespeichertank zum Leiten des erhitzten flüssigen Wärmeträgers in den weiteren Energiespeichertank verbunden ist.

Der weitere Energiespeichertank kann ein Wärmespeicher, insbesondere ein metallbasierter Hochtemperaturspeicher, ein Latentwärmespeicher (basierend auf einen Enthalpieumsatz der Phasenänderung eines Speichermaterials, damit kann eine große Energiemenge auf dem Temperaturniveau des Phasenwechsels zur Verfügung gestellt werden), ein sensibler Speicher (die gespeicherte Energiemenge hängt von der spezifischen Wärmekapazität des Speichermaterials, dessen Masse und der nutzbaren Temperaturänderung ab), ein thermochemischer Speicher (basierend auf einer Enthalpieänderung einer physikalischen Umwandlung (Sorption) oder einer reversiblen chemischen Reaktion zur Speicherung, verlustfrei über beliebige Zeiträume speicherbar), ein Feststoffspeicher oder ein Flüssigspeicher, zum Speichern und Bereitstellen von Prozesswärme sein. Auch die Bereitstellung von Prozessdampf mittels solcher Speicher ist möglich. Der weitere Energiespeichertank speichert beispielsweise einen Wärmeträger mit einer höheren Temperatur als derjenigen eines im Energiespeichertank gespeicherten Wärmeträgers. Insbesondere kann der weitere Energiespeichertank ein wie oben beschriebener Dampfspeicher sein.

In sämtlichen oben beschriebenen Beispielen der erfindungsgemäßen Brauerei kann weiterhin eine Wärmepumpe vorgesehen sein. Die Wärmepumpe kann mit dem Energiespeichertank und/oder dem Verdampfungstank verbunden sein. Insbesondere kann die Wärmepumpe dazu ausgebildet sein, thermische Energie (Temperatur) eines aus dem Energiespeichertank gelieferten flüssigen Wärmeträgers zu verringern und thermische Energie (Temperatur) eines von dem Verdampfungstank gelieferten flüssigen Wärmeträgers zu erhöhen. Alternativ kann die Wärmepumpe dazu ausgebildet sein, thermische Energie (Temperatur) eines aus dem Energiespeichertank gelieferten flüssigen Wärmeträgers zu erhöhen und thermische Energie (Temperatur) eines von dem Verdampfungstank gelieferten flüssigen Wärmeträgers zu verringern. Wenn in der Brauerei der oben beschriebene weitere Energiespeichertank vorhanden ist, kann dieser statt dem Energiespeichertank mit der Wärmepumpe verbunden sein.

Mit einer Wärmepumpe kann einem Wärmeträger Wärme entzogen werden. Beispielsweise wird ein kälterer als für die Verdampfung benötigter Wärmeträger aus dem Energiespeicher entnommen und der Wärmepumpe zugeführt. In der Wärmepumpe kann ihm thermische Energie entzogen und er kann beispielsweise mit Temperaturen von weniger als 30 °C, 20 °C, oder 4 °C wieder dem Energiespeichertank (in einen unteren Bereich desselben) zurückgeführt werden. Auf der anderen Seite der Wärmepumpe kann ein Wärmeträger, welcher aus dem Verdampfungstank stammen kann, zumindest teilweise mittels der vorher entzogenen Energie in seinem Temperaturniveau, beispielsweise von einer Temperatur zwischen 55 °C und 82 °C auf eine Temperatur von 75 °C bis 99 °C, angehoben werden.

Somit kann zum einen der in der Temperatur erhöhte Wärmeträger wieder für eine Dampferzeugung am Verdampfungstank eingesetzt werden, und zum anderen wird kalter Wärmeträger für rekuperative Zwecke bereitgestellt. Damit wird es ermöglicht, auch bisher nicht oder nur mit sehr viel Aufwand zurückgewinnbare thermische Energie einfach in das System aufzunehmen. Niedrige Temperaturen eines vorwiegend rekuperativ erwärmten Wärmeträgers beispielsweise mit Temperaturen zwischen 20 °C und 70 °C können mittels der Wärmepumpe nutzbar gemacht werden. Ein rekuperativ erwärmter Wärmeträger mit den genannten niedrigen Temperaturniveaus kann zum Beispiel aus einer Kälteanlage einer Brauerei stammen. Eine Kälteanlage wird beispielsweise mit Ammoniak betrieben, das nach der Verdichtung eine Temperatur von zumeist 25 °C bis 40 °C aufweist und gekühlt werden muss. Häufig erfolgt das über Luftkühler, wodurch die thermische Energie verloren geht. Diese kann nun, wie oben beschrieben, wiederverwendet werden. Auch kann das Abwasser einer Brauerei, dessen Temperatur zwischen 10 °C und über 70 °C schwanken kann, verwendet werden, um einen Wärmeträger mit den genannten niedrigen Temperaturniveaus bereitzustellen.

Die erfindungsgemäße Brauerei erlaubt nicht nur die Einbindung jeglicher thermischer Verbraucher, sondern auch die effiziente Einbindung rekuperativer Energien aus allen Bereichen der Brauerei. Eine rekuperative Energiequelle kann beispielsweise ein Pfannendunstkondensator oder ein Würzekühler sein. Die Einbindung kann über Wärmetauscher, Wärmepumpen oder andere Technologien erfolgen. Zudem können erneuerbare Energien wie Solarthermie, Geothermie und andere ebenfalls eingebunden werden. Auch die Einbindung eines Blockheizkraftwerkes ist, wie bereits beschrieben, in vorteilhafter Weise, möglich. Das System ermöglicht auch den Einsatz jeglicher Primärenergiequelle oder rekuperativer oder regenerativer Energiequelle einschließlich Biomasse, wie beispielsweise Holzpellets oder Hackschnitzel oder Fernwärme oder Biogas.

Die oben genannte Aufgabe wird auch durch Bereitstellen eines Verfahrens zur Getränkeherstellung, beispielsweise zum Bierbrauen, gelöst. Das Verfahren umfasst die Schritte:
Bereitstellen eines Energiespeichertanks zum Speichern, insbesondere rekuperativ gewonnener, thermischer Energie mittels eines flüssigen Wärmeträgers;
Bereitstellen eines mit dem Energiespeichertank verbundenen Verdampfungstanks;
Bereitstellen eines mit dem Verdampfungstank verbundenen Dampfverdichters;
Leiten des flüssigen Wärmeträgers von dem Energiespeichertank in den Verdampfungstank;
Erzeugen eines dampfförmigen Wärmeträgers zumindest aus einem Teil des flüssigen Wärmeträgers in dem Verdampfungstank;
Leiten des dampfförmigen Wärmeträgers aus dem Verdampfungstank in den Dampfverdichter; und
Verdichten zumindest eines Teils des dampfförmigen Wärmeträgers unter Erhöhung der Temperatur desselben in dem Dampfverdichter, um einen verdichteten dampfförmigen Wärmeträger zu erzeugen.

Das Verfahren, auch in den unten angegebenen Weiterbildungen, kann mithilfe der Brauerei, wie sie in den obigen Beispielen beschrieben wurde, ausgeführt werden und in jedem der oben beschriebenen Beispiele der erfindungsgemäßen Brauerei kann das Verfahren und seine Weiterbildungen geeignet implementiert sein.

Insbesondere kann das Verfahren weiterhin den Schritt des Leitens des verdichteten dampfförmigen Wärmeträgers zu einem Verbraucher thermischer Energie umfassen. Das Verfahren kann weiterhin den Schritt des Leitens zumindest eines Teils des flüssigen Wärmeträgers aus dem Verdampfungstank in den Energiespeichertank umfassen. Das Verfahren kann weiterhin die Schritte des Bereitstellens eines Heißdampfkühlers und Leitens des verdichteten dampfförmigen Wärmeträgers von dem Dampfverdichter zu dem Heißdampfkühler umfassen. In dem Heißdampfkühler wird Sattdampf erzeugt, der dann einem Hochtemperatur-Energie-Wärmeverbraucher zur Versorgung mit thermischer Energie, gegebenenfalls nach einer Zwischenspeicherung, zugeführt wird.

Im Folgenden werden Ausführungsformen einer erfindungsgemäßen Brauerei und eines erfindungsgemäßen Verfahrens zur Getränkeherstellung unter Bezugnahme auf die Zeichnung beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.

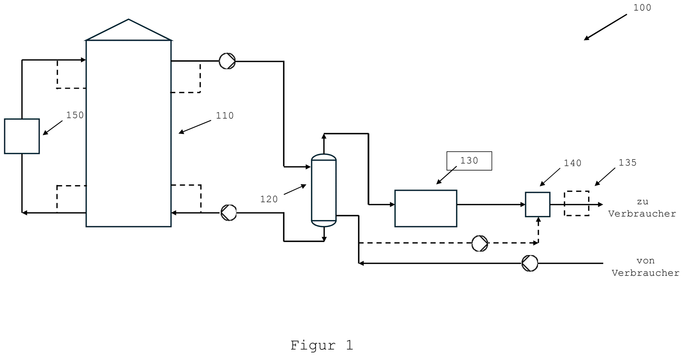

Figur 1 veranschaulicht eine Brauerei mit einem Energiespeichertank, einem Verdampfungstank und einem Dampfverdichter gemäß einer Ausführungsform der vorliegenden Erfindung mithilfe derer ein Getränkeherstellungsverfahren gemäß einer Ausführungsform der vorliegenden Erfindung ausgeführt werden kann.

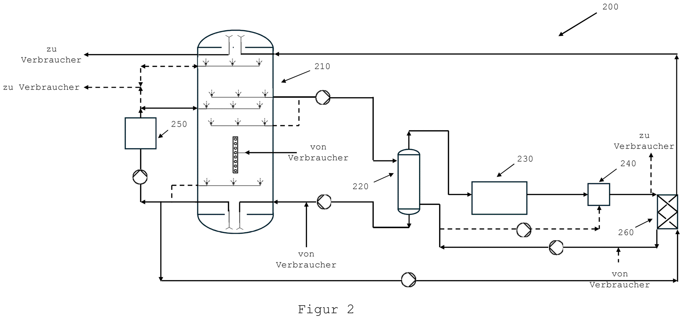

Figur 2 veranschaulicht eine Brauerei mit einem Energiespeichertank, einem Verdampfungstank, einem Dampfverdichter und einem Wärmetauscher zum Heizen eines in den Energiespeichertank einzulagernden Wärmeträgers gemäß einer weiteren Ausführungsform der vorliegenden Erfindung mithilfe derer ein Getränkeherstellungsverfahren gemäß einer Ausführungsform der vorliegenden Erfindung ausgeführt werden kann.

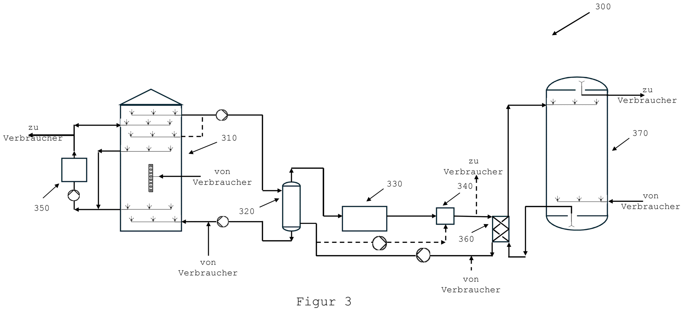

Figur 3 veranschaulicht eine Brauerei mit zwei Energiespeichertanks (einem Energiespeichertank und einem weiteren Energiespeichertank), einem Verdampfungstank und einem Dampfverdichter gemäß einer Ausführungsform der vorliegenden Erfindung mithilfe derer ein Getränkeherstellungsverfahren gemäß einer Ausführungsform der vorliegenden Erfindung ausgeführt werden kann.

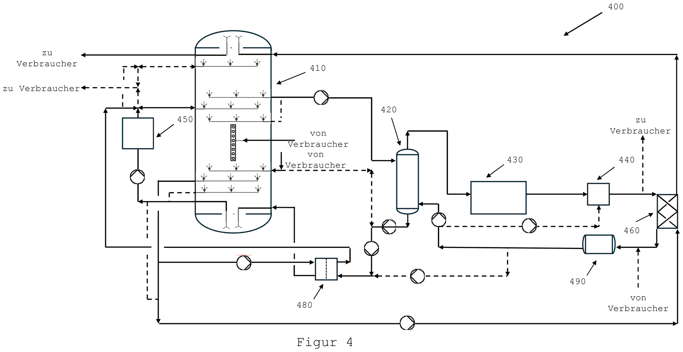

Figur 4 veranschaulicht eine Brauerei mit einem Energiespeichertank, einem Verdampfungstank, einem Dampfverdichter, einer Wärmepumpe und einem Wärmetauscher zum Heizen eines in den Energiespeichertank einzulagernden Wärmeträgers gemäß einer Ausführungsform der vorliegenden Erfindung mithilfe derer ein Getränkeherstellungsverfahren gemäß einer Ausführungsform der vorliegenden Erfindung ausgeführt werden kann.

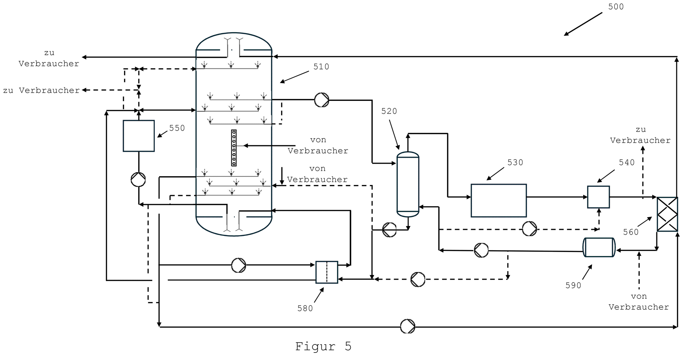

Figur 5 veranschaulicht eine Brauerei mit einem Energiespeichertank, einem Verdampfungstank, einem Dampfverdichter, einer Wärmepumpe und einem Wärmetauscher zum Heizen eines in den Energiespeichertank einzulagernden Wärmeträgers gemäß einer weiteren Ausführungsform der vorliegenden Erfindung mithilfe derer ein Getränkeherstellungsverfahren gemäß einer weiteren Ausführungsform der vorliegenden Erfindung ausgeführt werden kann.

Es werden Techniken zur Getränkeherstellung, insbesondere zum Bierbrauen, in denen thermische Energie durch Verdampfung und Verdichtung eines Wärmeträgers bereitgestellt wird, beschrieben, wobei ein Energiespeichertank, ein Verdampfungstank und ein Dampfverdichter Verwendung finden. Mithilfe des Dampfverdichters können ein oder mehrere Verbraucher thermischer Energie, insbesondere Hochtemperatur-Energie-Wärmeverbraucher, versorgt werden.

Figur 1 zeigt beispielhaft eine Brauerei 100 gemäß einer Ausführungsform beziehungsweise mithilfe derer ein erfindungsgemäßes Getränkeherstellungsverfahren, insbesondere ein Verfahren zur Bierherstellung, ausgeführt werden kann. Unter Bierherstellung ist die Herstellung eines Produkts in einer Brauerei bis hin zum verkaufsfertigen, d.h. dem abgefüllten und verpackten Produkt zu verstehen. Unter Bierherstellung sind alle Produkte, die in einer Brauerei hergestellt werden können umfasst. Die Brauerei 100 umfasst zumindest einen Energiespeichertank 110 und einen damit verbundenen Verdampfungstank 120. Diesem ist ein Dampfverdichter 130 nachgeschaltet. Dem Energiespeicher 110 können auch mehrere Verdampfungstanks und mehrere Dampfverdichter nachgeschaltet sein, und es können mehrere Energiespeichertanks vorhanden sein. Am Energiespeicher 110 können, wie es mit gestrichelten Linien gezeigt ist, zusätzliche Ausmischmöglichkeiten über weitere Anschlüsse mit Ein- und Auslagerungsmittel (nicht gezeigt) vorgesehen sein. Solche zusätzlichen Ausmischmöglichkeiten können für jegliche an dem Energiespeicher 110 angeschlossene Energiequelle oder Energiesenke (Wärmeverbraucher) vorhanden sein.

Insbesondere kann der Energiespeichertank 110 ein Schichtenspeichertank sein, in dem auf unterschiedlichen Niveaus Wärmeträger unterschiedlicher Temperaturen gespeichert werden kann. Der Energiespeichertank 110 kann beispielsweise in verschiedenen Teilbereichen Wärmeträger/Wärme mit Temperaturniveaus zwischen 75 °C und 98 °C oder 75 °C und 110 °C oder darüber speichern. Beispielsweise wird im oberen Bereich des Energiespeichertanks 110 ein Wärmeträger mit einer Temperatur von mehr als 70 °C, 85 °C, 90 °C oder 95 °C und im unteren Bereich des Energiespeichertanks 110 ein Wärmeträger mit einer Temperatur zwischen 82 °C und 55 °C oder darunter, beispielsweise zumindest 4 °C gespeichert. Im oberen Bereich des Energiespeichertanks 110 kann auch ein Wärmeträger mit einer höheren Temperatur, beispielsweise zwischen 115 °C und 120 °C oder zwischen 120 °C und 145 °C gespeichert werden.

Die Einlagerung und Auslagerung des Wärmeträgers kann temperaturabhängig mittels einer oder mehrerer (Schicht-)Ladelanzen erfolgen. Der Energiespeichertank 110 kann als atmosphärisch offener oder atmosphärisch geschlossener (beispielsweise als Druckspeicher) Tank ausgebildet sein. Weiterhin kann der Energiespeichertank 110 Regelklappen, Temperatursonden, zusätzliche Leitungen und Steuerungen zur temperaturabhängigen Schichtung aufweisen. Der Energiespeicher kann auch mit einer innen- und/oder außenliegenden elektrischen Heizeinrichtung versehen sein.

Der Wärmeträger kann hier und in den weiter unten beschriebenen Brauereien 200 bis 500 beispielsweise Wasser, etwa Brauwasser, unbehandeltes oder aufbereitetes (beispielsweise enthärtetes) Wasser oder Kesselspeisewasser (entsalztes und aufbereitetes Wasser) sein.

Der Wärmeträger wird aus dem oberen (warmen) Bereich des Energiespeichertanks 110 dem Verdampfungstank 120 zugeleitet. Im Verdampfungstank 120 erfolgt eine Niederdruckverdampfung, wie bereits weiter oben beschrieben, bei der der Wärmeträger abgekühlt wird und zumindest ein Teil der Masse des Wärmeträgers in den dampfförmigen Zustand übergeht. Durch den Phasenübergang von flüssig in dampfförmig eines Teils des Wärmeträgers wird dem flüssigen Wärmeträger thermische Energie entzogen. Je höher die in dem Verdampfungstank 120 vorgehaltene Niedertemperatur ist, desto geringer ist der benötigte Unterdruck am Verdampfungstank 120 und desto höher wird der "coefficient of performance" (cop) des nachgeschalteten Dampfverdichters 130. Der Einsatz mehrerer Verdampfungstanks und Dampfverdichter nach dem Energiespeicher 110 kann in Hinblick auf eine Redundanz des Systems oder für große Brauereien sinnvoll oder notwendig sein.

Der Verdampfungstank 120 ist unterdrucksicher oder auch vakuumsicher ausgeführt und beinhaltet ein Fassungsvermögen für Niedertemperaturdampf beziehungsweise Niederdruckdampf und ein weiteres Fassungsvermögen für den flüssigen Wärmeträger. Niedertemperaturdampf ist Dampf mit einer Temperatur von unter 100 °C. Niederdruckdampf entspricht im wesentlichen Niedertemperaturdampf, allerdings wird dieser über die Verdampfungstemperatur vor Ort, also der Temperatur, bei der auf einer bestimmten Meereshöhe ein Wärmeträger verdampft, definiert. Beispielsweise verdampft Wasser auf Meereshöhe bei 100 °C, Niedertemperaturdampf ist dann mit einer Temperatur von kleiner als 100 °C definiert. Der Verdampfungstank 120 kann eine Vorrichtung zur Einspeisung, insbesondere eine Einspritzung, etwa eine Eindüsungsvorrichtung oder (Feinst-)Einspritzung zur (Feinst-)Versprühung beziehungsweise Vernebelung, aufweisen. Der Dampfaustritt aus dem Verdampfungstank 120 mittels des von dem Dampfverdichter erzeugten Unterdruck erfolgt beispielsweise am höchsten Punkt des Verdampfungstanks 120 und muss über dem Flüssigkeitsspiegel liegen. Die Zufuhr von Wärmeträger erfolgt ebenfalls direkt in den Dampfraum des Verdampfungstanks 120. Der flüssige nach der Niederdruckverdampfung abgekühlte Wärmeträger kann über einen weiteren Anstich unten am Verdampfungstank 120 abgeführt werden. Die zumindest für die Abfuhr von abgekühltem Wärmeträger notwendige Pumpe ist (unter-)drucksicher auszuführen. Unter anderem ist/wird mit der oder den Pumpen auch der Füllstand im Verdampfungstank 120 sowie die für die Dampferzeugung nötige Masse an Wärmeträger beziehungsweise dessen Durchsatz am Verdampfungstank 120 über geeignete Armaturen, Feldgeräte und eine Steuerung gesteuert/geregelt.

Des Weiteren kann der Verdampfungstanks 120 im unteren Bereich und unterhalb des Flüssigkeitsspiegel Anschlüsse, um einen Wärmeträger für Kühlung und/oder Einspritzung am Dampfverdichter 130 oder für einen optionalen Heißdampfkühler 140 (siehe Beschreibung weiter unten) bereitzustellen, aufweisen. Alternativ oder zusätzlich zum dem Heißdampfkühler 140 kann ein Dampfspeicher 135 vorgesehen sein. Ein weiterer Anschluss dient der Rückführung des flüssigen Wärmeträgers nach Abgabe zumindest eines Teils seiner thermischen Energie in vorwiegend flüssiger Form in den Energiespeichertank 110, sodass ein geschlossener Wärmeträgerkreislauf ausgebildet wird. Dieser Anschluss befindet sich beispielsweise unterhalb des Flüssigkeitsspiegels des Verdampfungstanks 120. Anschlüsse für Sicherheitsarmaturen, wie einem Sicherheitsventil, können vorgesehen sein. Zusätzlich können weitere Anschlüsse für eine Absalzung des Wärmeträgers oder auch eine Abschlammung vorhanden sein.

Im Dampfverdichter 130 wird der von dem Verdampfungstank 120 gelieferte Niedertemperaturdampf beziehungsweise Niederdruckdampf auf ein Temperaturniveau zwischen 105 °C und 200 °C, beispielsweise auf eine Temperatur von zumindest 115 °C, 125 °C, oder 150 °C, angehoben und verdichtet. Die Verdichtung erfolgt unter Einsatz elektrischer Energie. Zudem erzeugt und regelt der Dampfverdichter 130 den im Verdampfungstank 120 erforderlichen Unterdruck. Um den Dampfverdichter 130 zu starten, muss dieser zuerst aufgeheizt und anschließend kurzfristig mit Gegendruck auf der Dampfaustrittsseite beaufschlagt werden. Das kann beispielsweise mithilfe eines kleinen Schnelldampferzeugers erreicht werden. Der Dampfverdichter 130 ist beispielsweise als Schraubenverdichter ausgeführt und kann eine oder mehrere Verdichterstufen aufweisen.

Zwischen dem Dampfverdichter 130 und dem Verdampfungstank 120 kann eine Leitung zur Entnahme von einem Wärmeträger aus dem Verdampfungstank und Einspritzung beim Dampfverdichter vorhanden sein (in den Figuren nicht gezeigt). Für die Einspritzung kann der Wärmeträger aber auch an anderen geeigneten Stellen des Systems entnommen werden.

In der in Figur 1 gezeigten Brauerei 100 ist dem Dampfverdichter 130 optional ein Heißdampfkühler 140 zur Bereitstellung von Sattdampf nachgeschaltet. Auch für die Heißdampfkühlung kann der im System zirkulierende Wärmeträger eingesetzt werden. In dem Heißdampfkühler 140 wird Heißdampf über eine Regelstrecke durch eine Düsenvorrichtung in eine Wasservorlage geleitet. In der Wasservorlage wird der Heißdampf auf Sattdampftemperatur gekühlt. Dabei gibt der durch die Wasservorlage strömende Heißdampf thermische Energie an das Kühlwasser ab. Ein Teil des Kühlwassers verdampft und wird als Sattdampf abgeführt. Beispielsweise ist in dem Heißdampfkühler 140 ein Wasserabscheider integriert, der verhindert, dass bei Lastspitzen Kühlwasser in die Dampfleitung mitgerissen wird. Das Kühlwasserniveau wird mit einer Niveauelektrode gemessen und verdampftes Kühlwasser geregelt nachgespeist. Die Einspeisung des Kühlwassers mit dem erforderlichen Vordruck erfolgt im unteren Bereich des Heißdampfkühlers 140. Das Kühlwasser des Heißdampfkühlers 140 ist ein zuvor in dem Energiespeichertank 110 gespeicherter Wärmeträger und stammt beispielsweise aus dem Verdampfungstank 120. Hat der von dem Dampfverdichter 130 gelieferte Heißdampf beispielsweise eine Temperatur von 150 °C, kann der in dem Heißdampfkühler 140 erzeugte Sattdampf eine Temperatur von circa 145 °C aufweisen.

Ein oder mehrere Wärmeverbraucher können von dem Dampfverdichter 130 oder dem optionalen Heißdampfkühler 140 oder aus dem zusätzlichen optionalen Dampfspeicher 135 mit Hochtemperatur-Energie versorgt werden. Hier wie auch in den Figuren 2 bis 5 gezeigten Ausführungsformen kann ein Dampfspeicher optional alternativ oder zusätzlich zu dem ein Heißdampfkühler gesetzt werden und kann in verschiedenen Bereichen des Systems vorgesehen sein. Ein Dampfspeicher kann direkt nach einem Dampfverdichter und vor einem optionalen Heißdampfkühler oder nach einem optionalen Heißdampfkühler installiert sein. Der optionale Dampfspeicher kann somit beispielsweise irgendwo zwischen einem Dampfverdichter und einem Wärmeverbraucher angeordnet sein. Weiter kann ein optionaler Dampfspeicher auch parallel zu anderen Verbrauchern thermischer Energie, beispielsweise einem Wärmetauscher vorgesehen sein, Der in dem Verbraucher nach Einsatz der thermischen Energie abgekühlte, nunmehr als Kondensat vorliegende Wärmeträger kann dann dem Verdampfungstank 120 und/oder dem Energiespeichertank 110 wieder zugeleitet werden.

Der Verbraucher kann beispielsweise ein Würzekocher/Würzeheißhalter, eine Flaschenreinigungsvorrichtung oder ein Wärmetauscher (siehe Beschreibung weiter unten) zum Aufheizen von einem in dem Energiespeichertank 110 zu speichernden relativ warmen Wärmeträger sein. Als Würzekocher/Würzeheißhalter können beispielsweise Außenkocher und/oder Innenkocher oder auch Boden- und/oder Zargenheizflächen, welche an oder in Behältern angebracht sind, eingesetzt werden. Der Würzekocher/Würzeheißhalter kann beispielsweise ein mit etwa 120 °C oder weniger heißem Wasser betriebener Außenkocher sein.

Dadurch, dass mittels des Verdampfungstanks 120 und des Dampfverdichters 130 Hochtemperatur-Energie bereitgestellt werden kann, werden für die Versorgung der Brauerei 100 beispielsweise lediglich Niedertemperatur-Energiequellen benötigt. Da in vielen Brauereien bereits ein Energiespeicher zum Speichern eines Wärmeträgers mit Niedertemperatur vorhanden ist, können diese auch leicht nachgerüstet werden. Auf ein Kesselhaus für das Liefern von Hochtemperatur-Energie kann (im Wesentlichen) verzichtet werden. Unter Kesselhaus ist eine herkömmliche Einrichtung zur Versorgung einer Brauerei mit Hochtemperatur-Energie-Wärmeträger zu verstehen, beispielsweise der zuvor genannte Hochdruckheißwasserkessel oder ein Dampfkessel.

Die Brauerei 100 ermöglicht nicht nur die Einbindung jeglicher (Wärme-)Verbraucher, sondern auch die effiziente Einbindung von regenerativen Energiequellen (etwa Biogas, Fernwärme, oder Solarthermiequellen) und rekuperativen Energiequellen aus allen Bereichen der Brauerei sowie gegebenenfalls von Primärenergiequellen (etwa Öl oder Gas). Die Einbindung kann über Wärmetauscher, Wärmepumpen oder andere Technologien erfolgen. Auch die Einbindung eines Blockheizkraftwerkes ist möglich.

Die in Figur 1 gezeigte Brauerei 100 umfasst eine Energiequelle 150, die eine der oben genannten Energiequellen sein kann, beispielsweise zum Erhitzen eines Teils des in dem Energiespeichertank 110 gespeicherten oder zu speichernden Wärmeträgers. Die Energiequelle 150 kann auch zum Starten des Dampfverdichters 130 dienen.

Die mit Bezug auf die Brauerei 100 beschriebenen Komponenten derselben können auch in den in den Figuren 2 bis 5 gezeigten Brauereien 200, 300, 400 beziehungsweise 500 Verwendung finden.

In Figur 2 ist eine Brauerei 200 gezeigt, die (vergleichbar mit der in Figur 1 gezeigten Brauerei 100) einen Energiespeichertank 210, optional einen in der Figur nicht gezeigten Dampfspeicher, einen Verdampfungstank 220, einen Dampfverdichter 230, optional einen Heißdampfkühler 240 und eine Energiequelle 250 umfasst. Ein Dampfspeicher kann optional eingesetzt werden und kann in verschiedenen Bereichen des Systems vorgesehen sein. Ein Dampfspeicher kann direkt nach einem Dampfverdichter und vor einem optionalen Heißdampfkühler oder nach einem optionalen Heißdampfkühler installiert sein. Der optionale Dampfspeicher kann somit beispielsweise irgendwo zwischen einem Dampfverdichter und einem Wärmeverbraucher angeordnet sein. Weiter kann ein optionaler Dampfspeicher auch parallel zu anderen Verbrauchern thermischer Energie, beispielsweise einem Wärmetauscher vorgesehen sein. Der Energiespeichertank 210 kann auf verschiedenen Temperaturniveaus Wärmeverbraucher versorgen und von Wärmeverbrauchern abgekühlten Wärmeträger zwischenspeichern. Einige optionale Verbindungen sind wieder gestrichelt gezeichnet.

Weiterhin umfasst die Brauerei 200 einen Wärmetauscher 260 zum Erhitzen eines in dem Energiespeichertank 210 zu speichernden Wärmeträgers. Der Wärmeträger kann aus einem unteren Bereich des Energiespeichertanks 210 dem Wärmetauscher 260 zugleitet werden. Handelt es sich bei dem Energiespeicher 210 um einen atmosphärisch offenen Speicher wird dieser mit Niedertemperatur über den Wärmetauscher 260 beladen, handelt es sich um einen Druckspeicher, kann er auch mit Hochtemperatur beladen werden. Die von dem Wärmetauscher 260 bereitgestellte und im Energiespeichertank 210 zwischengespeicherte thermische Energie kann auf entsprechender Höhe dem Energiespeichertank 210 entnommen und Niedertemperatur-Energie- oder, im Fall eines Druckspeichers, auch Hochtemperatur-Energie-Wärmeverbrauchern zur Verfügung gestellt werden. Es ist auch möglich, wenn ein Hochtemperatur-Energie-Wärmeverbraucher ein Dampfverbraucher ist, diesen vor dem Wärmetauscher 260, nach dem Dampfverdichter 230 beziehungsweise nach dem optionalen Heißdampfkühler 240 abzuzweigen.

Der Wärmetauscher 260 wird mit einem dampfförmigen Wärmeträger betrieben, der von dem Dampfverdichter 230 beziehungsweise dem optionalen Heißdampfkühler 240 geliefert wird. Der Dampfverdichter 230 beziehungsweise der optionale Heißdampfkühler 240 können auch einen anderen Wärmeverbraucher, beispielsweise einen Würzekocher/-heißhalter, mit dampfförmigem Wärmeträger beliefern. Der nach Verwendung für den Wärmeverbraucher kondensierte Wärmeträger sowie der an dem Wärmetauscher 260 beim Erhitzen des in dem Energiespeichertank 210 zu speichernden Wärmeträger kondensierte Wärmeträger des Wärmetauscher 260 können wieder dem Verdampfungstank 220 zurückgeführt werden und dort nochmals thermische Energie abgeben. Wird Wärmeträger aus einem Energiespeichertank 210 entnommen, wird Wärmeträger auch wieder dem Energiespeichertank 210 zugeführt. Diese Ausprägung kann dahingehend vorteilhaft sein, dass somit der Dampfverdichter 230 weitgehend konstant betrieben, ein bloßer Stand-by-Betrieb vermieden und die erzeugte Hochtemperatur oder Niedertemperatur in dem Energiespeichertank 210 zwischengespeichert und für Verbraucher vorgehalten werden können.

Ein Wärmeträger kann vor dem Verdampfungstank 220 ausgemischt werden. Dafür benötigte Regelklappen, Armaturen und Steuerung können geeignet vorgesehen sein. Somit kann auch Wärmeträger mit einer höheren mit einem Wärmeträger mit einer niedrigeren Temperatur, als am Verdampfungstank 230 benötigt, auf die gewünschte Verdampfungstemperatur am Verdampfungstank ausgemischt werden. Damit kann auch ein für eine Niedertemperaturverdampfung ungeeigneter, also zu kalter Wärmeträger in der Brauerei 200 (mit-)verarbeitet werden. Dieses gilt auch für die Brauerei 100 und die im folgenden beschriebenen Brauereien 300 bis 500.

Ein weiteres Ausführungsbeispiel für eine erfindungsgemäße Brauerei 300 ist in Figur 3 gezeigt. Die Brauerei 300 umfasst (vergleichbar mit der in Figur 1 gezeigten Brauerei 100 und der in Figur 2 gezeigten Brauerei 200) einen Energiespeichertank 310, einen in der Figur nicht gezeigten optionalen Dampfspeicher, einen Verdampfungstank 320, einen Dampfverdichter 330, optional einen Heißdampfkühler 340 und eine Energiequelle 350. Ein Dampfspeicher kann optional eingesetzt werden und kann in verschiedenen Bereichen des Systems vorgesehen sein. Ein Dampfspeicher kann direkt nach einem Dampfverdichter und vor einem optionalen Heißdampfkühler oder nach einem optionalen Heißdampfkühler installiert sein. Der optionale Dampfspeicher kann somit beispielsweise irgendwo zwischen einem Dampfverdichter und einem Wärmeverbraucher angeordnet sein. Weiter kann ein optionaler Dampfspeicher auch parallel zu anderen Verbrauchern thermischer Energie, beispielsweise einem Wärmetauscher vorgesehen sein. Wie in den zuvor beschriebenen Brauereien 100 und 200 wird auch in der Brauerei 300 ein Hochtemperatur-Energie-Wärmeverbraucher durch den Dampfverdichter 330 beziehungsweise den optionalen Heißdampfkühler 340 oder aus dem optionalen Dampfspeicher mit thermischer Energie versorgt. Der Energiespeichertank 310 kann auf verschiedenen Temperaturniveaus Wärmeverbraucher versorgen und von Wärmeverbrauchern abgekühlten Wärmeträger zwischenspeichern. Einige optionale Verbindungen sind wieder gestrichelt gezeichnet.

Weiterhin umfasst die Brauerei 300 einen Wärmetauscher 360 und einen weiteren Energiespeichertank 370, der mit dem Wärmetauscher 360 derart verbunden ist, dass er dem Wärmetauscher 360 einen Wärmeträger liefert, der in diesem erhitzt wird, und von dem Wärmetauscher 360 den erhitzten Wärmeträger zugeliefert bekommt. Der Wärmeträger des Wärmetauscher 360 zum Erhitzen des Wärmeträgers des weiteren Energiespeichertanks 370 stammt aus dem Dampfverdichter 330 beziehungsweise dem optionalen Heißdampfkühler 340. Nach Abkühlung im Wärmetauscher 360 kann er dem Verdampfungstank 320 zugeleitet werden.

Insbesondere kann der weitere Energiespeichertank 370 ein Schichtenspeichertank sein, in dem auf unterschiedlichen Niveaus Wärmeträger unterschiedlicher Temperaturen gespeichert werden kann. Der weitere Energiespeichertank 370 kann beispielsweise in verschiedenen Teilbereichen Wärmeträger/Wärme mit Temperaturniveaus zwischen 75 °C und 98 °C oder 75 °C und 110 °C speichern. Beispielsweise wird im oberen Bereich des weiteren Energiespeichertanks 370 ein Wärmeträger mit einer Temperatur von mehr als 70 °C, 85 °C, 90 °C oder 95 °C und im unteren Bereich des weiteren Energiespeichertanks 370 ein Wärmeträger mit einer Temperatur zwischen 82 °C und 55 °C gespeichert. Im oberen Bereich des weiteren Energiespeichertanks 370 kann auch ein Wärmeträger mit einer höheren Temperatur, beispielsweise zwischen 115 °C und 120 °C oder zwischen 120 °C und 145 °C gespeichert werden. Die Einlagerung und Auslagerung des Wärmeträgers kann temperaturabhängig mittels einer oder mehrerer (Schicht-)Ladelanzen erfolgen. Der weitere Energiespeichertank 370 kann als atmosphärisch offener oder als atmosphärisch geschlossener (beispielsweise Druckspeicher) Tank ausgebildet sein. Weiterhin kann der weitere Energiespeichertank 370 Regelklappen, Temperatursonden, zusätzliche Leitungen und Steuerungen zur temperaturabhängigen Schichtung oder Entnahme von Wärmeträger aufweisen. Der weitere Energiespeicher 370 kann auch mit einer innen- und/oder außenliegenden elektrischen Heizeinrichtung versehen sein beziehungsweise mit der Energiequelle 350 verbunden sein.

Der weitere Energiespeichertank 370 kann aus dem oberen Bereich einen Hochtemperatur-Energie-Wärmeverbraucher und wenn auch nicht gezeigt, aus dem unteren Bereich einen Niedertemperatur-Energie-Wärmeverbraucher versorgen. Der weitere Energiespeichertank 370 kann auch weitere Anschlüsse mit Be- und Entlademittel aufweisen und mit weiteren Verbrauchern verbunden sein. Es können auch mehr als die zwei Energiespeichertanks 310 und 370 vorgesehen sein, beispielsweise zumindest ein Niedertemperaturspeichertank und zwei Druckspeichertanks, die Druckspeicher jeweils einen Wärmeträger mit nur einem Temperaturniveau speichern können.

In den Figuren 4 und 5 sind Ausführungsformen der erfindungsgemäßen Brauerei 400 beziehungsweise 500 gezeigt, die der Brauerei 200 ähneln. Im Gegensatz zu der Brauerei 200 weisen die Brauereien 400 und 500 zusätzlich eine Wärmepumpe 480 beziehungsweise 580 auf. Weiterhin weisen die Brauereien 400 und 500 jeweils einen optionalen Kondensatsammeltank 490 beziehungsweise 590 zum Zwischenspeichers eines kondensierten Wärmeträgers auf. Ein solcher Kondensatsammeltank kann auch in den anderen Ausführungsformen, die mit Bezug auf die Figuren 1 bis 3 beschrieben sind, Verwendung finden.

Die in Figur 4 gezeigte Brauerei 400 umfasst (vergleichbar mit der in Figur 1 gezeigten Brauerei 100) einen Energiespeichertank 410, einen optionalen in der Figur nicht gezeigten Dampfspeicher, einen Verdampfungstank 420, einen Dampfverdichter 430, optional einen Heißdampfkühler 440 und eine Energiequelle 450. Ein Dampfspeicher kann optional eingesetzt werden und kann in verschiedenen Bereichen des Systems vorgesehen sein. Ein Dampfspeicher kann direkt nach einem Dampfverdichter und vor einem optionalen Heißdampfkühler oder nach einem optionalen Heißdampfkühler installiert sein. Der optionale Dampfspeicher kann somit beispielsweise irgendwo zwischen einem Dampfverdichter und einem Wärmeverbraucher angeordnet sein. Weiter kann ein optionaler Dampfspeicher auch parallel zu anderen Verbrauchern thermischer Energie, beispielsweise einem Wärmetauscher vorgesehen sein. Ein Hochtemperatur-Energie-Wärmeverbraucher wird durch den Dampfverdichter 430 beziehungsweise den optionalen Heißdampfkühler 440 oder dem optionalen Dampfspeicher mit thermischer Energie versorgt. Der Energiespeichertank 410 kann auf verschiedenen Temperaturniveaus Wärmeverbraucher versorgen und von Wärmeverbrauchern abgekühlten Wärmeträger zwischenspeichern. Einige optionale Verbindungen sind wieder gestrichelt gezeichnet.

Die in Figur 5 gezeigte Brauerei 500 umfasst (vergleichbar mit der in Figur 1 gezeigten Brauerei 100) einen Energiespeichertank 510, einen Verdampfungstank 520, einen Dampfverdichter 530, optional einen Heißdampfkühler 540 und eine Energiequelle 550. Ein Hochtemperatur-Energie-Wärmeverbraucher wird durch den Dampfverdichter 530 beziehungsweise den optionalen Heißdampfkühler 540 oder aus dem optionalen Dampfspeicher mit thermischer Energie versorgt. Ein Dampfspeicher kann optional eingesetzt werden und kann in verschiedenen Bereichen des Systems vorgesehen sein. Ein Dampfspeicher kann direkt nach einem Dampfverdichter und vor einem optionalen Heißdampfkühler oder nach einem optionalen Heißdampfkühler installiert sein. Der optionale Dampfspeicher kann somit beispielsweise irgendwo zwischen einem Dampfverdichter und einem Wärmeverbraucher angeordnet sein. Weiter kann ein optionaler Dampfspeicher auch parallel zu anderen Verbrauchern thermischer Energie, beispielsweise einem Wärmetauscher vorgesehen sein. Der Energiespeichertank 510 kann auf verschiedenen Temperaturniveaus Wärmeverbraucher versorgen und von Wärmeverbrauchern abgekühlten Wärmeträger zwischenspeichern. Einige optionale Verbindungen sind wieder gestrichelt gezeichnet.

Wie die Brauerei 200 und zu demselben Zweck umfassen auch die Brauereien 400 und 500 einen Wärmetauscher 460 beziehungsweise 560 zum Erhitzen eines in dem Energiespeichertank 410 beziehungsweise 510 zu speichernden Wärmeträgers. Der zum Erhitzen in dem Wärmetauscher 460 beziehungsweise 560 benötigte von dem Dampfverdichter 430 beziehungsweise 530 oder optional dem Heißdampfkühler 440 beziehungsweise 540 oder dem optionalen Dampfspeicher stammende Wärmeträger kondensiert bei Abgabe der thermischen Energie an den zu erhitzenden in dem Energiespeichertank 410 beziehungsweise 510 zu speichernden Wärmeträger und kann dann in dem optionalen Kondensatsammeltank 490 beziehungsweise 590 zwischengespeichert werden. Auch an einen Hochtemperatur-Energie-Wärmeverbraucher wird ein Wärmeträger zur Versorgung desselben von dem Dampfverdichter 430 beziehungsweise 530 oder optional dem Heißdampfkühler 440 beziehungsweise 540 oder aus dem optionalen Dampfspeicher geliefert, kondensiert dort und kann dann ebenfalls in dem optionalen Kondensatsammeltank 490 beziehungsweise 590 zwischengespeichert werden. Von dem optionalen Kondensatsammeltank 490 beziehungsweise 590 kann der kondensierte Wärmeträger dann an den Verdampfungstank 420 beziehungsweise 520 zurückgeliefert werden.

Die Brauerei 400 umfasst weiterhin eine Wärmepumpe 480, die in dem in Figur 4 gezeigten Beispiel dem Verdampfungstank 420 nachgeschaltet ist und mit einem aus diesem Verdampfungstank 420 stammenden Wärmeträger angeströmt wird. Die Wärmepumpe 480 kann alternativ oder zusätzlich von dem in dem optionalen Kondensatsammeltank 490 zwischengespeicherten Wärmeträger oder auch einem direkt von einem Wärmeverbraucher stammenden Wärmeträger angeströmt werden. Mit der Wärmepumpe 480 kann einem Wärmeträger Wärme entzogen und auf höherem Temperaturniveau wieder eingesetzt werden. In der Brauerei 400 wird ein kälterer als für die Verdampfung benötigter Wärmeträger aus dem Energiespeichertank 410 entnommen und der Wärmepumpe 480 zugeführt. In der Wärmepumpe wird diesem Wärmeträger thermische Energie entzogen, und er wird beispielsweise mit einer Temperatur von weniger als 30 °C, 20 °C oder 4 °C wieder im unteren Bereich in den Energiespeichertank 410 eingeleitet. Auf der anderen Seite der Wärmepumpe 480 wird ein Wärmeträger, der beispielsweise aus dem Verdampfungstank 420 gefördert wird, zumindest teilweise mittels der vorher entzogenen Energie in seinem Temperaturniveau erhöht. Die für die Wärmepumpe 480 beziehungsweise 580 benötigte elektrische Energie kann aus regenerativen Quellen, beispielsweise einer Photovoltaikanlage oder einem Blockheizkraftwerk stammen.

Beispielsweise wird ein aus dem Energiespeichertank 410 stammender Wärmeträger mit einer Temperatur zwischen 20 °C und 70 °C auf unter 10 °C abgekühlt und mit der durch die Wärmepumpe übertragenen thermischen Energie ein aus dem Verdampfungstank 420 stammender Wärmeträger mit einer Temperatur zwischen 55 °C und 82 °C auf eine Temperatur von 75 °C bis 99 °C angehoben. Dadurch kann der in der Temperatur erhöhte Wärmeträger wieder für eine Dampferzeugung am Verdampfungstank 420 eingesetzt werden, und es kann ein kalter beispielsweise abgekühlter Wärmeträger für rekuperative Zwecke bereitgestellt werden. Damit wird es möglich, auch bisher nicht oder nur mit sehr viel Aufwand zurückgewinnbare thermische Energie einfach in das System mit aufzunehmen und wieder einzusetzen. Thermische Energie niedriger Temperatur, beispielsweise zwischen 20 °C und 70 °C, kann mittels der Wärmepumpe nutzbar gemacht und sogar für die beschriebene Hochtemperaturerzeugung bereitgestellt werden.

Der Wärmeträger mit den genannten niedrigen Temperaturniveaus kann zum Beispiel aus einer Kälteanlage einer Brauerei stammen. Eine Kälteanlage wird beispielsweise mit Ammoniak betrieben, das nach der Verdichtung eine Temperatur von zumeist 25 °C bis 40 °C aufweist und gekühlt werden muss. Häufig erfolgt das über Luftkühler, wodurch die Energie verloren geht. Diese kann nun wieder eingesetzt werden. Ein anderes Beispiel ist das Abwasser einer Brauerei, das beispielsweise zwischen 10 °C und über 70 °C schwanken kann und zum Bereitstellen des Wärmeträgers mit den genannten niedrigen Temperaturniveaus verwendet werden kann. Auch diese thermische Energie des Abwassers kann somit teilweise oder vollständig zurückgewonnen werden. In einer weiteren Ausführung kann der mittels der Wärmepumpe 480 abgekühlte Wärmeträger genutzt werden, um Heißwürze auf die erforderliche Anstelltemperatur abzukühlen und die gesamte thermische Energie der Heißwürze auf den Wärmeträger zu übertragen. Der Wärmeträger weist nach der Übertragung der thermischen Energie der Würze beispielsweise eine Temperatur zwischen 90 °C und 98 °C auf und kann über den Energiespeichertank 420 für die Hochtemperaturbereitstellung genutzt oder direkt als Niedertemperatur an Verbrauchern wiederverwendet werden. Denkbar ist auch eine direkte Übertragung der thermischen Energie aus der Heißwürze mittels Wärmepumpe(-n) auf einen Wärmeträger.

Ähnlich wie die Brauerei 400 umfasst auch die in Figur 5 gezeigte Brauerei 500 eine Wärmepumpe 580, die in dem in Figur 5 gezeigten Beispiel dem Verdampfungstank 520 nachgeschaltet ist und mit einem aus diesem Verdampfungstank 520 stammenden Wärmeträger beliefert werden kann. Die Wärmepumpe 580 kann alternativ oder zusätzlich durch den in dem optionalen Kondensatsammeltank 590 zwischengespeicherten Wärmeträger oder auch einem direkt von einem Wärmeverbraucher stammenden Wärmeträger beliefert werden. Die in der Brauerei 500 eingesetzte Wärmepumpe 580 dient jedoch der Abkühlung dieser Wärmeträger. Auf der anderen Seite der Wärmepumpe 580 wird ein aus dem Energiespeichertank 510 stammender Wärmeträger mit einer Temperatur von beispielsweise zwischen 20 °C und 70 °C erwärmt, beispielsweise auf eine Temperatur zwischen 75 °C und 99 °C angehoben, und in dem Energiespeichertank 520 zur Weiterverwendung zwischengespeichert.

Einzelne Komponenten der in den Figuren 1 bis 5 veranschaulichten Brauereien 100, 200, 300, 400 beziehungsweise 500 können geeignet miteinander kombiniert werden. Die in den Figuren 1 bis 5 veranschaulichten Brauereien 100, 200, 300, 400 beziehungsweise 500 beziehungsweise Variationen davon können erfindungsgemäß zur Getränkeherstellung, zum Beispiel zum Bierbrauen, Verwendung finden und zum Ausführen einer Ausführungsform eines Verfahrens zur Getränkeherstellung genutzt werden.

Beispielsweise lässt sich unter Verwendung einer jeden der Brauereien 100, 200, 300, 400 und 500 ein Verfahren zur Getränkeherstellung mit den folgenden Schritten ausführen:
Bereitstellen eines Energiespeichertanks 110, 210, 310, 410, 510 zum Speichern, insbesondere rekuperativ gewonnener, thermischer Energie mittels eines flüssigen Wärmeträgers;
Bereitstellen eines mit dem Energiespeichertank 110, 210, 310, 410, 510 verbundenen Verdampfungstanks 120, 220, 320, 420, 520;
Bereitstellen eines mit dem Verdampfungstank 120, 220, 320, 420, 520 verbundenen Dampfverdichters 130, 230, 330, 430, 530;
Leiten des flüssigen Wärmeträgers von dem Energiespeichertank 110, 210, 310, 410, 510 in den Verdampfungstank 120, 220, 320, 420, 520;
Erzeugen eines dampfförmigen Wärmeträgers aus einem Teil des flüssigen Wärmeträgers in dem Verdampfungstank 120, 220, 320, 420, 520;
Leiten des dampfförmigen Wärmeträgers aus dem Verdampfungstank 120, 220, 320, 420, 520 in den Dampfverdichter 130, 230, 330, 430, 530; und
Verdichten zumindest eines Teils des dampfförmigen Wärmeträgers unter Erhöhung der Temperatur desselben in dem Dampfverdichter 130, 230, 330, 430, 530 durch Druckerhöhung, um einen verdichteten dampfförmigen Wärmeträger zu erzeugen.

Weiterhin kann das Verfahren den Schritt des Leitens des verdichteten dampfförmigen Wärmeträgers zu einem Verbraucher thermischer Energie, insbesondere einem Hochtemperatur-Energie-Wärmeverbraucher, umfassen. Weiterhin kann das Verfahren den Schritt des Leitens zumindest eines Teils des in dem Verdampfungstank 120, 220, 320, 420, 520 abgekühlten flüssigen Wärmeträgers aus dem Verdampfungstank 120, 220, 320, 420, 520 in den Energiespeichertank 110, 210, 310, 410, 510 umfassen. Weiterhin kann das Verfahren die Schritte des Bereitstellens eines Heißdampfkühlers 140, 240, 340, 440, 540 und Leitens des verdichteten dampfförmigen Wärmeträgers von dem Dampfverdichter 130, 230, 330, 430, 530 zu dem Heißdampfkühler 140, 240, 340, 440, 540, Erzeugen von Sattdampf in dem Heißdampfkühler 140, 240, 340, 440, 540 und Leiten des Sattdampfes von dem Heißdampfkühler 140, 240, 340, 440, 540 zu einem Verbraucher thermischer Energie umfassen. Weiterhin kann, wie oben beschrieben, ein Dampfspeicher vorgesehen sein.

Unter Verwendung des in den Figuren 2, 4 und 5 gezeigten Wärmetauschers 260, 460, 560 der Brauerei 200, 400, 500 kann das Verfahren das Heizen eines aus einem unteren Bereich des Energiespeichertanks 210, 410, 510 gelieferten Wärmeträgers mithilfe eines von dem Dampfverdichter 230, 430, 530 oder dem Heißdampfkühler 240, 440, 540 gelieferten dampfförmigen Wärmeträgers und das Leiten des erhitzten Wärmeträgers in einen oberen Bereich des Energiespeichertanks 210, 410, 510 umfassen.

Unter Verwendung des in der Figur 3 gezeigten Wärmetauschers 360 der Brauerei 300 kann das Verfahren das Heizen eines aus einem unteren Bereich des weiteren Energiespeichertanks 370 gelieferten Wärmeträgers mithilfe eines von dem Dampfverdichter 330 oder dem Heißdampfkühler 340 oder aus dem optionalen Dampfspeicher gelieferten dampfförmigen Wärmeträgers und das Leiten des erhitzten Wärmeträgers in einen oberen Bereich des weiteren Energiespeichertanks 370 umfassen.

Unter Verwendung der in den Figuren 4 und 5 gezeigten Wärmepumpe 480, 580 der Brauerei 400, 500 kann einem Wärmeträger Wärme entzogen und auf höherem Temperaturniveau wieder eingesetzt werden. Unter Verwendung der in der Figur 4 gezeigten Wärmepumpe 480 der Brauerei 400 umfasst das Verfahren das Verringern thermischer Energie, also das Absenken der Temperatur, eines aus dem Energiespeichertank 410 gelieferten flüssigen Wärmeträgers und das Erhöhen thermischer Energie, also das Erhöhen der Temperatur, eines zumindest teilweise von dem Verdampfungstank 420 gelieferten flüssigen Wärmeträgers. Die so prozessierten Wärmeträger werden dann auf den entsprechenden Temperaturniveaus in dem Energiespeichertank 410 bis zur Weiterverwendung zwischengespeichert. Unter Verwendung der in der Figur 5 gezeigten Wärmepumpe 580 der Brauerei 500 umfasst das Verfahren das Erhöhen thermischer Energie, also das Erhöhen der Temperatur, eines aus dem Energiespeichertank 510 gelieferten flüssigen Wärmeträgers und das Verringern thermischer Energie, also das Verringern der Temperatur, eines zumindest teilweise von dem Verdampfungstank 520 gelieferten flüssigen Wärmeträgers. Die so prozessierten Wärmeträger werden dann auf den entsprechenden Temperaturniveaus in dem Energiespeichertank 410 bis zur Weiterverwendung zwischengespeichert.

Auch wenn die Energiequelle 150, 250, 350, 450, 550 auf den Figuren zum Erhitzen eines Teils des in dem Energiespeichertank 110, 210, 310, 410, 510 gespeicherten oder zu speichernden Wärmeträgers offenbart wird, so sind die Ausführungsbeispiele nicht hierauf beschränkt. Die Energiequelle 150, 250, 350, 450 550 kann auch wenn nicht dargestellt zwischen dem Energiespeichertank 110, 210, 310, 410, 510 und Verdampfungstank 120, 220, 320, 420, 520 angeordnet sein.

Der erwärmte Wärmeträger, beispielsweise aus einer rekuperativen Gewinnung thermischer Energie (beispielsweise von einem Pfannendunstkondensator), muss nicht zwangsläufig in den Energiespeichertank eingeleitet werden, sondern kann zumindest teilweise auch direkt dem Verdampfungstank 120, 220, 320, 420, 520 zugeführt werden. Der von einem Wärmeverbraucher abgekühlte Wärmeträger muss nicht zwangsläufig vollständig dem Verdampfungstank 120, 220, 320, 420, 520 und/oder dem Energiespeichertank 110, 210, 310, 410, 510 zugeführt werden, möglich ist auch das zumindest ein Teil des Wärmeträgers direkt einer bevorzugt rekuperativen Gewinnung thermischer Energie (beispielsweise einem Pfannendunstkondensator) zugeführt werden.

Auch wenn in den Figuren nicht dargestellt so kann vor dem Verdampfungstank 120, 220, 320, 420, 520 auch ein Nachheizer in Form eines Wärmetauschers oder elektrische Heizeinrichtung vorgesehen sein, welcher den Wärmeträger auf eine notwendige Temperatur erwärmt.

Auch wenn in den Figuren nicht offenbart so kann, wenn der vom Wärmeverbraucher kommende Wärmeträger von der Temperatur noch ein ausreichendes Temperaturniveau aufweist, so kann vor dem Energiespeichertank 110, 210, 310, 410, 510 und/oder mit dem Energiespeichertank 110, 210, 310, 410, 510 verbundener Wärmetauscher angeordnet sein welcher primärseitig mit dem abgekühlten Wärmeträger und sekundärseitig mit Kaltwasser durchströmt wird, so kann aus Kaltwasser Warmwasser erzeugt werden welches in der Brauerei für verschiedene Zwecke (als Brauwasser und/oder Spül-/Reinigungszwecke) verwendet werden kann. Zur Speicherung von Kaltwasser kann sich vor dem Wärmetauscher ein Kaltwassertank befinden, zur Speicherung von Warmwasser kann sich nach dem Wärmetauscher ein Warmwassertank befinden.

## Patentansprüche

1. Brauerei (100, 200, 300, 400, 500), die umfasst:
einen Energiespeichertank (110, 210, 310, 410, 510) zum Speichern, insbesondere rekuperativ gewonnener, thermischer Energie mittels eines flüssigen Wärmeträgers;
einen Verdampfungstank (120, 220, 320, 420, 520), der mit dem Energiespeichertank (110, 210, 310, 410, 510) zum Leiten des flüssigen Wärmeträgers aus dem Energiespeichertank (110, 210, 310, 410, 510) in den Verdampfungstank (120, 220, 320, 420, 520) verbundenen ist, wobei der Verdampfungstank (120, 220, 320, 420, 520) dazu ausgebildet ist, aus einem Teil des flüssigen Wärmeträgers einen dampfförmigen Wärmeträger zu erzeugen;
einen Dampfverdichter (130, 230, 330, 430, 530), der mit dem Verdampfungstank (120, 220, 320, 420, 520) zum Leiten des dampfförmigen Wärmeträgers aus dem Verdampfungstank (120, 220, 320, 420, 520) in den Dampfverdichter (130, 230, 330, 430, 530) verbundenen ist, wobei der Dampfverdichter (130, 230, 330, 430, 530) dazu ausgebildet ist, zumindest einen Teil des dampfförmigen Wärmeträgers unter Erhöhung der Temperatur desselben zu verdichten, um einen verdichteten dampfförmigen Wärmeträger zu erzeugen.

2. Die Brauerei (100, 200, 300, 400, 500) gemäß Anspruch 1, die weiterhin einen Verbraucher thermischer Energie umfasst, der mit dem Dampfverdichter (130, 230, 330, 430, 530) zum Leiten des verdichteten dampfförmigen Wärmeträger aus dem Dampfverdichter (130, 230, 330, 430, 530) zu dem Verbraucher verbunden ist, und der mit dem Energiespeichertank (110, 210, 310, 410, 510) und/oder dem Verdampfungstank (120, 220, 320, 420, 520) verbunden ist.

3. Die Brauerei (200, 400, 500) gemäß Anspruch 1 oder 2, die weiterhin einen Wärmetauscher (260, 460, 560) umfasst, der mit dem Dampfverdichter (230, 430, 530) zum Erhitzen eines, insbesondere aus dem Energiespeichertank (210, 410, 510) dem Wärmetauscher (260, 460, 560) zugeleiteten, flüssigen Wärmeträgers verbunden ist, und der mit dem Energiespeichertank (210, 410, 510) zum Leiten des erhitzten flüssigen Wärmeträgers in den Energiespeichertank (210, 410, 510) verbunden ist.

4. Die Brauerei (300) gemäß Anspruch 1 oder 2, die weiterhin einen weiteren Energiespeichertank (370) und einen Wärmetauscher (360) umfasst, und wobei der Wärmetauscher (360) a) mit dem weiteren Energiespeichertank (370) zum Leiten eines flüssigen Wärmeträgers aus dem weiteren Energiespeichertank (370) zu dem Wärmetauscher (360) verbunden ist, b) mit dem Dampfverdichter (330) zum Erhitzen des von dem weiteren Energiespeichertank (370) zugeleiteten flüssigen Wärmeträgers verbunden ist und c) mit dem weiteren Energiespeichertank (370) zum Leiten des erhitzten flüssigen Wärmeträgers in den weiteren Energiespeichertank (370) verbunden ist.

5. Die Brauerei (100, 200, 300, 400, 500) gemäß Anspruch 1, die weiterhin einen Heißdampfkühler (140, 240, 340, 440, 540) und/oder einen Dampfspeicher (135) umfasst, der mit dem Dampfverdichter (130, 230, 330, 430, 530) zum Leiten des verdichteten dampfförmigen Wärmeträger aus dem Dampfverdichter (130, 230, 330, 430, 530) zu dem Heißdampfkühler (140, 240, 340, 440, 540) ) und/oder dem Dampfspeicher (135) verbunden ist, wobei der Heißdampfkühler (140, 240, 340, 440, 540) dazu ausgebildet ist, zumindest aus einem Teil des verdichteten dampfförmigen Wärmeträgers Sattdampf zu erzeugen.

6. Die Brauerei (100, 200, 300, 400, 500) gemäß Anspruch 5, die weiterhin einen Verbraucher thermischer Energie umfasst, der mit dem Heißdampfkühler (140, 240, 340, 440, 540) zum Leiten des Sattdampfes von dem Heißdampfkühler (140, 240, 340, 440, 540) zu dem Verbraucher und/oder dem Dampfspeicher (135) verbunden ist, und der mit dem Energiespeichertank (110, 210, 310, 410, 510) und/oder dem Verdampfungstank (120, 220, 320, 420, 520) verbunden ist.

7. Die Brauerei (200, 400, 500) gemäß Anspruch 5 oder 6, die weiterhin einen Wärmetauscher (260, 460, 560) umfasst, der mit dem Heißdampfkühler (240, 440, 540) zum Erhitzen eines, insbesondere aus dem Energiespeichertank (210, 410, 510) dem Wärmetauscher (260, 460, 560) zugeleiteten, flüssigen Wärmeträgers und/oder dem Dampfspeicher (135) verbunden ist, und wobei der Heißdampfkühler (240, 440, 540) und/oder der Dampfspeicher (135) mit dem Energiespeichertank (210, 410, 510) zum Leiten des erhitzten flüssigen Wärmeträgers in den Energiespeichertank (210, 410, 510) verbunden ist.

8. Die Brauerei (300) gemäß Anspruch 5 oder 6, die weiterhin einen weiteren Energiespeichertank (370) und einen Wärmetauscher (360) umfasst, und wobei der Wärmetauscher (360) a) mit dem weiteren Energiespeichertank (370) zum Leiten eines flüssigen Wärmeträgers aus dem weiteren Energiespeichertank (370) zu dem Wärmetauscher (360) verbunden ist, b1) mit dem Heißdampfkühler (240, 440, 540) zum Erhitzen des von dem weiteren Energiespeichertank (370) zugeleiteten flüssigen Wärmeträgers verbunden ist und/oder b2) mit dem Dampfspeicher (135) und c) mit dem weiteren Energiespeichertank (370) zum Leiten des erhitzten flüssigen Wärmeträgers in den weiteren Energiespeichertank (370) verbunden ist.

9. Die Brauerei (400, 500) gemäß einem der vorhergehenden Ansprüche, die weiterhin eine Wärmepumpe (480, 580) umfasst, die mit dem Energiespeichertank (410, 510) und/oder dem Verdampfungstank (420, 520) verbunden ist.

10. Die Brauerei (400) gemäß Anspruch 9, in der die Wärmepumpe (480) dazu ausgebildet ist,
a) thermische Energie eines aus dem Energiespeichertank (410) gelieferten flüssigen Wärmeträgers zu verringern und thermische Energie eines von dem Verdampfungstank (420) gelieferten flüssigen Wärmeträgers zu erhöhen; oder
b) thermische Energie eines aus dem Energiespeichertank (510) gelieferten flüssigen Wärmeträgers zu erhöhen und thermische Energie eines von dem Verdampfungstank (520) gelieferten flüssigen Wärmeträgers zu verringern.

11. Die Brauerei (100, 200, 300, 400, 500) gemäß einem der vorhergehenden Ansprüche, die weiterhin ein Blockheizkraftwerk umfasst, das dazu ausgebildet ist, thermische und/oder elektrische Energie, insbesondere zumindest teilweise elektrische Energie und/oder thermische Energie für den Dampfverdichter (130, 230, 330, 430, 530), bereitzustellen.

12. Verfahren zur Getränkeherstellung, mit den Schritten
Bereitstellen eines Energiespeichertanks (110, 210, 310, 410, 510) zum Speichern, insbesondere rekuperativ gewonnener, thermischer Energie mittels eines flüssigen Wärmeträgers;
Bereitstellen eines mit dem Energiespeichertank (110, 210, 310, 410, 510) verbundenen Verdampfungstanks (120, 220, 320, 420, 520);
Bereitstellen eines mit dem Verdampfungstank (120, 220, 320, 420, 520) verbundenen Dampfverdichters (130, 230, 330, 430, 530);
Leiten des flüssigen Wärmeträgers von dem Energiespeichertank (110, 210, 310, 410, 510) in den Verdampfungstank (120, 220, 320, 420, 520);
Erzeugen eines dampfförmigen Wärmeträgers zumindest aus einem Teil des flüssigen Wärmeträgers in dem Verdampfungstank (120, 220, 320, 420, 520);
Leiten des dampfförmigen Wärmeträgers aus dem Verdampfungstank (120, 220, 320, 420, 520) in den Dampfverdichter (130, 230, 330, 430, 530); und
Verdichten zumindest eines Teils des dampfförmigen Wärmeträgers unter Erhöhung der Temperatur desselben in dem Dampfverdichter (130, 230, 330, 430, 530), um einen verdichteten dampfförmigen Wärmeträger zu erzeugen.

13. Das Verfahren gemäß Anspruch 12, weiterhin mit Leiten des verdichteten dampfförmigen Wärmeträgers zu einem Verbraucher thermischer Energie.

14. Das Verfahren gemäß Anspruch 12 oder 13, weiterhin mit Leiten zumindest eines Teils des in dem Verdampfungstank (120, 220, 320, 420, 520) gekühlten flüssigen Wärmeträgers aus dem Verdampfungstank (120, 220, 320, 420, 520) in den Energiespeichertank (110, 210, 310, 410, 510).

15. Das Verfahren gemäß Anspruch 12, 13 oder 14, weiterhin mit Bereitstellen eines Heißdampfkühlers (140, 240, 340, 440, 540) und/oder Dampfspeichers (135) und Leiten des verdichteten dampfförmigen Wärmeträgers von dem Dampfverdichter (130, 230, 330, 430, 530) a) zu dem Heißdampfkühler (140, 240, 340, 440, 540), Erzeugen von Sattdampf in dem Heißdampfkühler (140, 240, 340, 440, 540) und Leiten des Sattdampfes von dem Heißdampfkühler (140, 240, 340, 440, 540) zu einem Verbraucher thermischer Energie und/oder b) Leiten von Dampf aus dem Dampfspeicher (135) zu dem Verbraucher thermischer Energie.
